# EUROPEAN PATENT APPLICATION

(11) **EP 4 203 271 A1**
(43) Date of publication of application: **28.06.2023**
(21) Application number: 21217556.6
(22) Date of filing: 23.12.2021
(51) Int. Cl.: H02K 7/04

(54) **A ROTOR FOR A ROTARY ELECTRIC MACHINE**

(71) Applicant: Valeo eAutomotive Germany GmbH, 91056 Erlangen (DE)
(72) Inventor: Volkmuth, Florian, Bad Neustadt a.d.Saale (DE); Wieczorek, Christoph, Bad Neustadt a.d.Saale (DE); Beetz, Sebastian, Bad Neustadt a.d.Saale (DE); Förster, David, Bad Neustadt a.d.Saale (DE); Seubert, Nikolas, Bad Neustadt a.d.Saale (DE); Englert, Christoph, Bad Neustadt a.d.Saale (DE); Förtsch, Steffen, Bad Neustadt a.d.Saale (DE)
(74) Representative: Valeo Powertrain Systems

(57) **Abstract**

The invention concerns a rotor (3) for a rotary electric machine, the rotor (3) having an axis (X) of rotation and comprising:
- a rotor shaft extending parallel to the axis of rotation;
- a rotor body (7) mounted on the rotor shaft (5), said rotor body:
∘ having a plurality of teeth (11) protruding radially and at least one field coil (10) being wound around the plurality of teeth (11), wherein a balancing material (40) is present locally on the field coil and is attached to the field coil by surface adhesion.

## Description

### FIELD OF THE INVENTION

The present invention belongs in particular to the field of rotary electric machines configured to be on board of an automotive vehicle, such as an electric vehicle or a hybrid vehicle. The vehicle can be of any type, such as a land, air or sea vehicle.

The present invention relates in particular to a rotor for a rotary electric machine.

### BACKGROUND OF THE INVENTION

As is known, an electric or a hybrid automotive vehicle presents an electric drive comprising a rotary electric machine which needs to be supplied with electric power, for instance by a high voltage power supply battery, to deliver a mechanical power in order to ensure propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, such as the wheels of the vehicle.

In particular, it is known to have the rotor separately excited using a field coil. This type of rotors is commonly referred as wound rotors or slip ring rotors. Such a rotor comprises a rotor body formed of a stack of laminations and has a plurality of teeth projecting radially. Then, the field coil is configured to be wound around each of the plurality of teeth.

A conventional solution for mounting the rotor body of the rotor shaft relies on having an outer circumference of the rotor shaft slightly higher than an inner circumference of the rotor body. Then, the rotor body is mounted on the rotor shaft by press-fitting.

A cover is provided to protect the field coil at its axial ends, said cover being mounted on the rotor shaft.

Another technology of machine requires a magnet rotor. In this type of rotor, the rotor body comprises slots with magnets inserted therein.

In general, each component of a rotor has a deviation with regards to the shape, the dimensions and the symmetry. Due to the assembly of more than two components together to build up a rotor, the rotor will be a non-symmetric part with regards to rotation, which results in an eccentrically center of gravity that leads to an imbalance when the rotor will be rotated. An imbalance is exciting an additional radial force (which increases with increasing rotational speed), and leads in most cases to undesirable vibrations of the machine with said imbalance rotor.

In this context, an objective of the present invention is to provide an improved balanced rotor.

### SUMMARY OF THE INVENTION

The present invention concerns a rotor for a rotary electric machine, the rotor having an axis of rotation and comprising:
- a rotor shaft extending parallel to the axis of rotation;
- a rotor body mounted on the rotor shaft, said rotor body:
   ∘ having a plurality of teeth protruding radially and at least one field coil being wound around the plurality of teeth, wherein a balancing material is present locally on the field coil and is attached to the field coil by surface adhesion; or
   ∘ a plurality of slots extending from an axial end of the rotor body to the other axial end of the rotor body and a plurality of magnets each being inserted in the slot, wherein a balancing material is present locally in the slot and attached by surface adhesion to the slot wall and the magnet inserted therein.

The invention enables a positive balancing of the rotor by adding the balancing material. It is thus possible to correct the position of the center of gravity and to decrease the imbalance and consequently the resulting radial forces that could lead to vibrations.

Thanks to the invention, there is no need for milling or drilling process (negative balancing) that generates flakes. The components will not be contaminated by such flakes. Further advantage is that the cover will not be weakened due to the negative balancing method. The adding of material (balancing material) is a cleaner process and can be automatized.

The balancing material can be directly applied to existing rotor components. In other words, it is not necessary to provide holes specifically dedicated to the positive balancing of the rotor. The positive balancing is achieved by depositing material on the field coils or in the magnet slots, which are already existing components of the rotor.

According to the present invention, the surface adhesion means an intimate surface contact, in particular via chemical bonds such as covalent bonds, between the balancing material and the field coil or the slot wall.

According to an aspect of the invention, the balancing material is an adhesive applied locally on the field coil or dispensed in the magnet slot.

According to an aspect of the invention, the balancing material has a density higher than 1 g/cm3, in particular higher than 2 g/cm3.

According to an aspect of the invention, the balancing material contains a curable component, in particular a curable resin.

According to an aspect of the invention, the balancing material is applied as a layer on the field coil, in particular on a coil end. In particular, said coil end is an axial coil end located at an axial end of the teeth. Specifically said coil end links two parts of the coil which extend along opposite sides of the teeth.

According to an aspect of the invention, the layer is applied on the resin that impregnates the wires of the field coil.

According to an aspect of the invention, some field coils receive locally a layer of balancing material and some field coils are free of balancing material so as to add masses to balance the rotor.

According to an aspect of the invention, each coil end has, in a section along a plane containing the axis of rotation, an external longitudinal profile made of a flat top section and, on opposite sides of the flat top section, an inner inclined section and an outer inclined section so that the coil end external longitudinal profile is concave with a concavity directed towards the respective tooth.

In particular, the outer inclined section has a slope steeper than the slope of the inner inclined section.

According to an aspect of the invention, the outer inclined section has a radial extension that is shorter that the radial extension of the inner inclined section.

According to an aspect of the invention, the inner and outer inclined sections are substantially rectilinear.

According to an aspect of the invention, the flat top section is substantially perpendicular to the axis of rotation.

According to an aspect of the invention, a balancing material is present locally on the field coil, on the outer inclined section.

According to an aspect of the invention, the rotor further comprises an end plate located on an axial end of the teeth and on which the coil end is wound, said end plate having a radially outer wall extending proximate said outer inclined section, said balancing material being located in a space between said outer inclined section and the radially outer wall.

According to an aspect of the invention, each coil end has, along a view in a direction parallel to the axis of rotation, a central portion inscribed in a rectangle and, on each longest side of the rectangle, respectively a radially outer portion and a radially inner portion, both radially inner and outer portions being inscribed each in a trapezoid, said trapezoids having their respective longest base corresponding to the longest side of the rectangle.

According to an aspect of the invention, the height of the inner trapezoid is greater than the height of the outer trapezoid.

According to an aspect of the invention, the shortest base of the outer trapezoid is greater than the shortest base of the inner trapezoid.

According to an aspect of the invention, the balancing material is present in the magnet slot, on a portion only of the length of the slot.

In a variant, the balancing material is present in the magnet slot, along the whole length of the slot.

According to an aspect of the invention, the slot has, in a cross-section perpendicular to the axis of rotation, a substantially rectangular portion with, at each small sides of the rectangle, a pocket, the magnet being inserted in the rectangular portion, the pockets defining free space capable of receiving the balancing material.

According to an aspect of the invention, some pockets receive the balancing material and some pockets are free of the balancing material so as to add masses to balance the rotor.

According to an aspect of the invention, the magnets are force inserted in the slots. As an alternative, the magnets are glued in the slots.

According to an aspect of the invention, the magnet contains rare earth.

The invention also relates to a method for balancing a rotor for a rotary electric machine, the rotor having an axis of rotation and comprising:
- a rotor shaft extending parallel to the axis of rotation;
- a rotor body mounted on the rotor shaft, said rotor body:
   ∘ having a plurality of teeth protruding radially and at least one field coil being wound around the plurality of teeth, wherein the method comprises the step of depositing a balancing material locally on the field coil so as it is attached to the field coil by surface adhesion; or
   ∘ a plurality of slots extending from an axial end of the rotor body to the other axial end of the rotor body and a plurality of magnets each being inserted in the slot, wherein the method comprises the step of dispensing, in particular with a dispensing device, a balancing material locally in the slot so as it is attached by surface adhesion to the slot wall and the magnet inserted therein.

According to an aspect of the invention, the balancing material is cured by exposition to a heat source such as a light.

The invention also relates to a rotary electric machine for an electric or a hybrid vehicle, comprising a rotor as defined above. The rotary electric machine in particular comprises a stator, the stator surrounding coaxially the rotor.

The invention also relates to an electric drive system comprising the rotary electric machine as defined above and an inverter configured to convert a direct current voltage coming from a high-voltage power supply battery into an alternating current voltage so as to drive the rotary electric machine. The AC voltage may be a multiphase AC voltage, especially a three-phase voltage.

The invention also relates to an electric or a hybrid vehicle, comprising the electric drive system for driving the vehicle. The vehicle may comprise the high-voltage power supply battery, preferably a rechargeable battery for providing the DC voltage to the inverter, if applicable.

The invention also relates to a rotor for a rotary electric machine, the rotor having an axis of rotation and comprising:
- a rotor shaft extending parallel to the axis of rotation;
- a rotor body mounted on the rotor shaft, said rotor body:
   ∘ having a plurality of teeth protruding radially;
   ∘ at least one field coil being wound around the plurality of teeth, the field coil having, on each tooth, coil ends on its axial ends;
wherein each coil end has, in a section along a plane containing the axis of rotation, an external longitudinal profile made of a flat top section and, on opposite sides of the flat top section, an inner inclined section and an outer inclined section so that the coil end external longitudinal profile is concave with a concavity directed towards the respective tooth.

In particular, the outer inclined section has a slope steeper than the slope of the inner inclined section.

According to an aspect of the invention, the outer inclined section has a radial extension that is shorter that the radial extension of the inner inclined section.

According to an aspect of the invention, the inner and outer inclined sections are substantially rectilinear.

According to an aspect of the invention, the flat top section is substantially perpendicular to the axis of rotation.

According to an aspect of the invention, a balancing material is present locally on the field coil, on the outer inclined section. The rotor according to this invention can comprise any of the features previously stated in relation with the other inventions, specifically the features related to said balancing material.

The invention also relates to a rotor for a rotary electric machine, the rotor having an axis of rotation and comprising:
- a rotor shaft extending parallel to the axis of rotation;
- a rotor body mounted on the rotor shaft, said rotor body:
   ∘ having a plurality of teeth protruding radially;
   ∘ at least one field coil being wound around the plurality of teeth, the field coil having, on each tooth, coil ends on its axial ends;
wherein each coil end has, along a view in a direction parallel to the axis of rotation, a central portion inscribed in a rectangle and, on each longest side of the rectangle, respectively a radially outer portion and a radially inner portion, both radially inner and outer portions being inscribed each in a trapezoid, said trapezoids having their respective longest base corresponding to the longest side of the rectangle.

According to an aspect of the invention, the height of the inner trapezoid is greater than the height of the outer trapezoid.

According to an aspect of the invention, the shortest base of the outer trapezoid is greater than the shortest base of the inner trapezoid.

The rotor according to this invention can comprise any of the features previously stated in relation with the other inventions.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of an automotive electric or hybrid vehicle comprising a rotary electric machine according to an embodiment of the invention;
Figure 2 is a schematic diagram of a rotor and a stator of the rotary electric machine of Figure 1;
Figure 3 is a schematic diagram in perspective of the rotor of Figure 2;
Figure 4 is a schematic diagram of a partial cut view of the rotor of Figure 3;
Figure 5 is a schematic diagram of a view along axis X of the rotor of Figure 4;
Figure 6 is a detailed view of coil ends of figure 5;
Figure 7 is a view of a coil end of figure 5 in a section along a plane containing the axis of rotation;
Figure 8 is a schematic diagram of a rotor according to another embodiment of the invention;
Figure 9 is a schematic diagram of a dispensing device to apply balancing material to rotor of figure 8.

### DETAILED DESCRIPTION

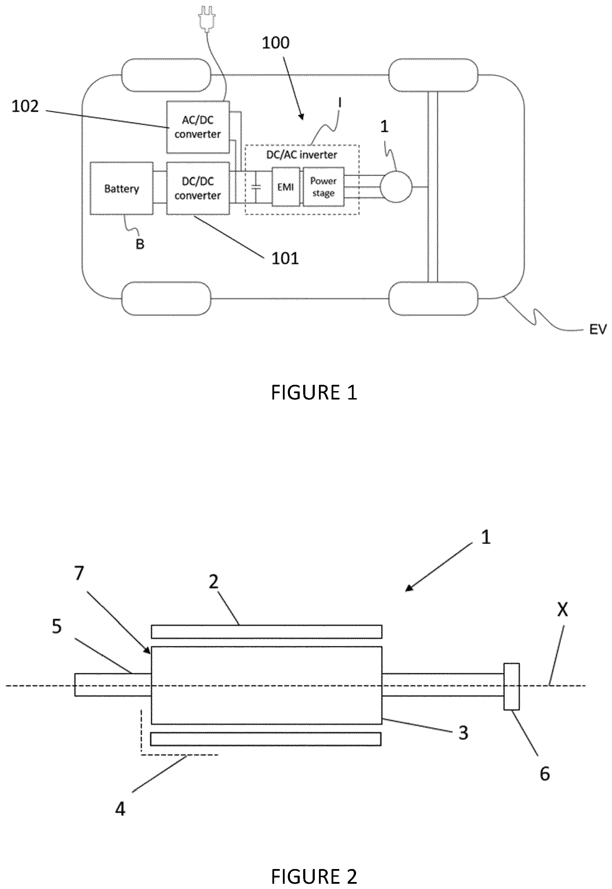

Figure 1 represents schematically an electric vehicle or a hybrid electric automotive vehicle EV comprising wheels and an electric drive system 100 configured to drive at least indirectly at least one of the wheels of the vehicle. The vehicle may comprise a high-voltage power supply battery B, preferably a rechargeable battery, for providing electric power to the electric drive.

The electric drive system 100 comprises a rotary electric machine 1 and an inverter I configured to convert a direct current (DC) voltage coming from the high-voltage power supply battery B into an alternating current (AC) voltage in order to drive the rotary electric machine 1. The rotary electric machine 1 may in particular be a three-phase rotary electric machine supplied with a three-phase AC voltage. A DC/DC converter 101 is provided between the battery B and the inverter I. An AC/DC converter 102 is provided between a network power supply and the inverter I in a known manner.

As illustrated in Figure 2, the rotary electric machine 1 comprises a stator 2, referring to the fixed part of the rotary electric machine, and a rotor 3, referring to the rotating part of the rotary electric machine. The stator 2 presents an annular shape and surrounds coaxially the rotor 3. The rotary electric machine 1 comprises a casing 4 covering the stator 2 and the rotor 3. In a known manner, the stator 2 comprises a stator body formed of a stack of laminations having a plurality of stator teeth projecting radially, and stator windings wound around the stator teeth.

The rotor 3 is a separately excited rotor, also commonly referred as a wound rotor or a slip ring rotor. In this type of rotor, the rotor comprises field coils connected to an external power supply through slip rings 6. The slip rings 6 correspond to electro-mechanical devices configured to allow the exchange of electric power between the field coils and the external power supply.

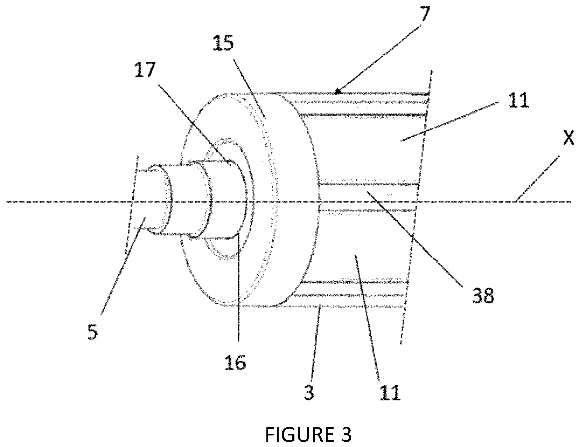

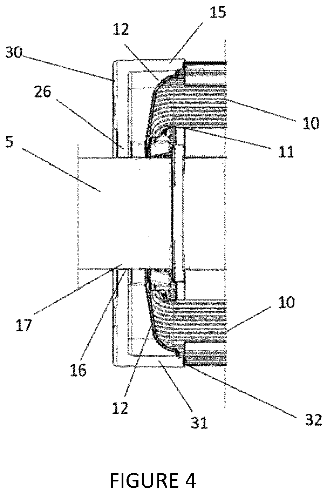

As illustrated in Figures 3 and 4, the rotor 1 comprises the rotor shaft 5 configured to rotate around the axis X of rotation, and a rotor body 7 being configured to be mounted on the rotor shaft 5. The shaft 5 is made of steel for instance.

The rotor body 7 has a plurality of teeth 11 protruding radially.

As visible on Figure 4, field coils 10 are wound around the plurality of teeth 11, said field coils 10 forming coil ends 12 at axial ends of the teeth 11.

Longitudinal inserts 38 are mounted between consecutive teeth 11.

Two covers 15 are mounted on the rotor shaft 5 and configured to cover the coil ends 12 on both axial ends of the rotor body 7. Only one cover 15 is visible on Figures 3 and 4. The other cover 15 is similar to the one shown on Figures 3 and 4.

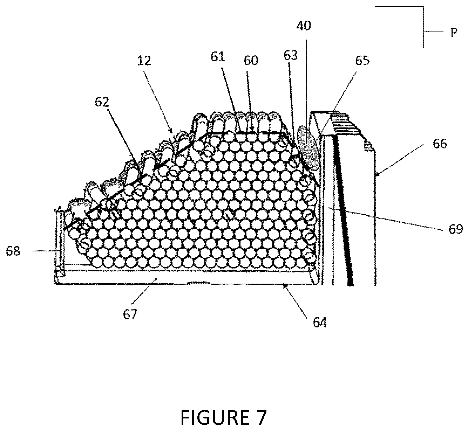

As visible on Figure 7, each coil end 12 has, in a section along a plane P containing the axis of rotation, an external longitudinal profile 60 made of a flat top section 61 and, on opposite sides of the flat top section 61, an inner inclined section 62 and an outer inclined section 63 so that the coil end external longitudinal profile 60 is concave with a concavity directed towards the respective tooth 11.

The outer inclined section 63 has a slope steeper than the slope of the inner inclined section 62.

The outer inclined section 63 has a radial extension that is shorter that the radial extension of the inner inclined section 62.

The inner and outer inclined sections 62 and 63 are substantially rectilinear.

The flat top section 61 is substantially perpendicular to the axis of rotation X.

An end plate 66 is placed on both axial ends of the teeth 11. Coil ends 12 are wound on the end plate 66.

Each end plate 66 has a plurality of coil end support elements 64 arranged around the axis of rotation X. Each support element 64 has a base portion 67 perpendicular to the axis of rotation X and a radially inner wall 68 and a radially outer wall 69 on opposite radial sides of the base portion.

The coil end 12 is maintained between the two walls 68, 69 and the base portion 67.

In the example illustrated in figure 7, a balancing material 40 is present locally on the field coil 12, on the outer inclined section 63, in a small space 65 between the inclined section 63 and the radially outer wall 69 of the end plate 66.

The balancing material 40 is protected by the outer wall 69 of the end plate 66.

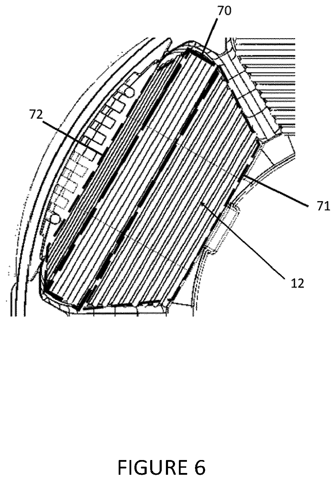

As visible on Figure 6, each coil end 12 has, along a view in a direction parallel to the axis of rotation, a central portion 70 inscribed in a rectangle and, on each longest side of the rectangle, respectively a radially outer portion 72 and a radially inner portion 71, both radially inner and outer portions being inscribed each in a trapezoid, said trapezoids having their respective longest base corresponding to the longest side of the rectangle.

The height of the inner trapezoid 71 is greater than the height of the outer trapezoid 72.

The shortest base of the outer trapezoid 72 is greater than the shortest base of the inner trapezoid 71.

Each cover 15 has a mounting opening 16 receiving a portion 17 of the rotor shaft 5 so that the cover 15 and the portion 17 of the rotor shaft exert reciprocal radial force on each other to ensure the fixation. The covers 15 are made of aluminum for instance.

The cover 15 comprises a main wall 30 perpendicular to the axis of rotation X with a planar central region 26 provided with the mounting opening 16.

The cover 15 has an external circumferential skirt 31 connected to the main wall 30.

This external skirt 31 comes in abutment with the rotor body 7 in a contact region 32.

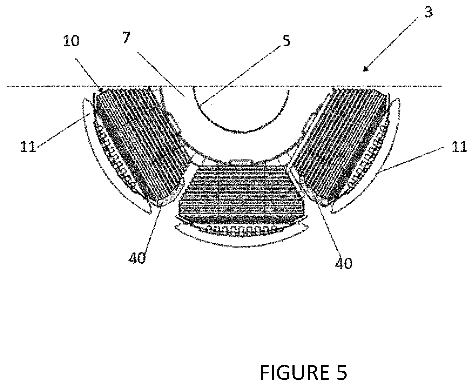

As shown on figure 5, a balancing material 40 is present locally on the field coil 10 and is attached to the field coil 10 by surface adhesion.

In the present embodiment, the balancing material 40 is an adhesive applied locally on the field coil 10, at two locations of the field coil in the embodiment of figure 5.

The balancing material 40 has a density higher than 1 g/cm3, in particular higher than 2 g/cm3. For instance, balancing material 40 contains a curable resin.

The balancing material 40 is applied as a layer on the field coil 10. The layer is applied on the resin that impregnates the wires of the field coil.

In the present embodiment, some field coil ends 12 receive locally a layer of balancing material 40 and some field coil ends 12 are free of balancing material so as to add masses to balance the rotor.

The method of balancing the rotor 3 comprises the steps of depositing a balancing material 40 locally on the field coil 10 and cure it, for instance by exposing the material 40 to a heat source such as a light, so as the material 40 is attached to the field coil by surface adhesion.

Before curing, the material 40 may be in a viscous liquid state.

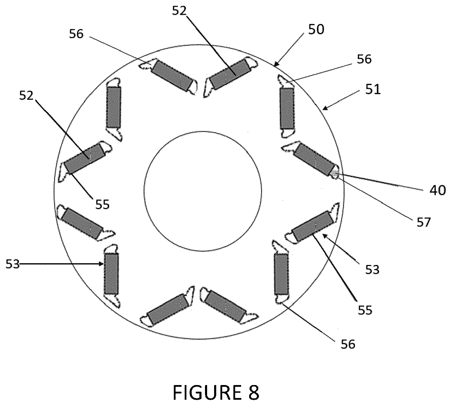

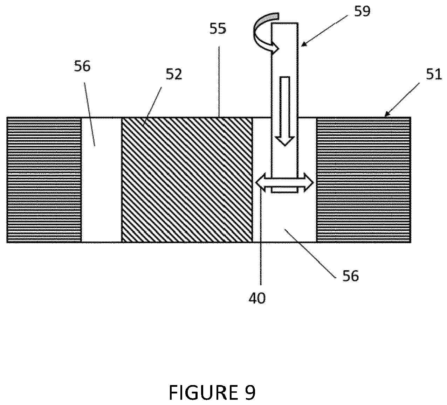

Another embodiment of the invention is disclosed in reference to figures 8 and 9.

The rotor 50 comprises a rotor body 51 carrying permanent magnets 52, and no coil windings.

The magnets 52 are each placed in a slot 53. The magnets 52 are force inserted in the slots 53.

The slots 53 extend from an axial end of the rotor body 51 to the other axial end of the rotor body 51.

Each slot 53 has, in a cross-section perpendicular to the axis of rotation X, a substantially rectangular portion 55 with, at each small sides of the rectangle, a pocket 56.

The magnet 52 is inserted in the rectangular portion 55, the pockets 56 defining free space capable of receiving the balancing material 40.

The balancing material 40 is present locally in the slot and attached by surface adhesion to the slot wall 57 and the magnet 52 inserted therein.

The balancing material 40 is present in the magnet slot 53, on a portion only of the length of the slot 53.

Some pockets 56 receive the balancing material 40 and some pockets 56 are free of the balancing material so as to add masses to balance the rotor.

In the embodiment of figures 8 and 9, the method for balancing the rotor 50 comprises the steps of dispensing with a dispensing device which is a dispensing needle 59, the balancing material 40 locally in the slot and of curing it so as it is attached by surface adhesion to the slot wall 57 and the magnet 52 inserted therein.

As shown on figure 9, the dispensing needle 59 is inserted in a pocket 56 to dispense the material 40. This needle can be rotatable to dispense the material 40 in a homogeneous manner in the pocket 56.

Then the material 40 is cured by exposition to a heat source.

## Claims

1. A rotor (3; 50) for a rotary electric machine (1), the rotor (3; 50) having an axis (X) of rotation and comprising:
- a rotor shaft (5) extending parallel to the axis of rotation (X);
- a rotor body (7; 51) mounted on the rotor shaft (5), said rotor body:
∘ having a plurality of teeth (11) protruding radially and at least one field coil (10) being wound around the plurality of teeth (11), wherein a balancing material (40) is present locally on the field coil and is attached to the field coil by surface adhesion; or
∘ a plurality of slots (53) extending from an axial end of the rotor body (51) to the other axial end of the rotor body and a plurality of magnets (52) each being inserted in the slot, wherein a balancing material is present locally in the slot and attached by surface adhesion to the slot wall (57) and the magnet inserted therein.

2. The rotor (3) as claimed in the preceding claim, wherein the balancing material (40) is an adhesive applied locally on the field coil (10) or dispensed in the magnet slot (53).

3. The rotor as claimed in any of the preceding claims, wherein the balancing material (40) has a density higher than 1 g/cm3, in particular higher than 2 g/cm3.

4. The rotor as claimed in any of the preceding claims, wherein the balancing material (40) contains a curable component, in particular a curable resin.

5. The rotor as claimed in any of the preceding claims, wherein the balancing material (40) is applied as a layer on the field coil (10), in particular on a coil end.

6. The rotor as claimed in the preceding claim, wherein some field coils (10) receive locally a layer of balancing material (40) and some field coils are free of balancing material so as to add masses to balance the rotor (3).

7. The rotor as claimed in the claim 5 or 6, wherein each coil end (12) has, along a view in a direction parallel to the axis of rotation, a central portion (70) inscribed in a rectangle and, on each longest side of the rectangle, respectively a radially outer portion (72) and a radially inner portion (71), both radially inner and outer portions being inscribed each in a trapezoid, said trapezoids having their respective longest base corresponding to the longest side of the rectangle.

8. The rotor as claimed in any of the preceding claims 5 to 7, wherein each coil end (12) has, in a section along a plane P containing the axis of rotation, an external longitudinal profile (60) made of a flat top section (61) and, on opposite sides of the flat top section (61), an inner inclined section (62) and an outer inclined section (63) so that the coil end external longitudinal profile (60) is concave with a concavity directed towards the respective tooth (11).

9. The rotor as claimed in the preceding claim, wherein a balancing material (40) is present locally on the field coil, on the outer inclined section (63).

10. The rotor as claimed in the preceding claim, further comprising an end plate (66) located on an axial end of the teeth and on which the coil end is wound, said end plate having a radially outer wall (69) extending proximate said outer inclined section (63), said balancing material (40) being located in a space (65) between said outer inclined section (63) and the radially outer wall (69).

11. The rotor as claimed in any of the preceding 1 to 4, wherein the balancing material is present in the magnet slot (53), on a portion only of the length of the slot (53).

12. The rotor as claimed in any of the preceding 1 to 4, wherein the balancing material (40) is present in the magnet slot, along the whole length of the slot (53).

13. The rotor as claimed in any of the preceding claims 10 and 11, wherein the slot (53) has, in a cross-section perpendicular to the axis of rotation, a substantially rectangular portion (55) with, at each small sides of the rectangle, a pocket (56), the magnet being inserted in the rectangular portion, the pockets defining free space capable of receiving the balancing material.

14. The rotor (3) as claimed in the preceding claim, wherein some pockets (56) receive the balancing material (40) and some pockets are free of the balancing material so as to add masses to balance the rotor.

15. A method for balancing a rotor (3; 50) for a rotary electric machine (1), the rotor having an axis (X) of rotation and comprising:
- a rotor shaft (5) extending parallel to the axis of rotation (X);
- a rotor body (7; 51) mounted on the rotor shaft (5), said rotor body:
∘ having a plurality of teeth (11) protruding radially and at least one field coil (10) being wound around the plurality of teeth, wherein the method comprises the step of depositing a balancing material (40) locally on the field coil so as it is attached to the field coil by surface adhesion; or
∘ a plurality of slots (53) extending from an axial end of the rotor body to the other axial end of the rotor body and a plurality of magnets (52) each being inserted in the slot, wherein the method comprises the step of dispensing, in particular with a dispensing device, a balancing material (40) locally in the slot so as it is attached by surface adhesion to the slot wall and the magnet inserted therein.
